# EUROPÄISCHE PATENTSCHRIFT

(11) **EP 0 871 552 B1**
(45) Veröffentlichungstag und Bekanntmachung des Hinweises auf die Patenterteilung: **12.07.2000**
(21) Anmeldenummer: 96944002.3
(22) Anmeldetag: 18.12.1996
(51) Int. Cl.: B05D 7/00, B05D 5/00

(54) **VERFAHREN ZUR HERSTELLUNG VON MEHRSCHICHTIGEN ÜBERZÜGEN**
PROCESS FOR THE PRODUCTION OF MULTILAYERED COATINGS
PROCEDE D'OBTENTION DE REVETEMENTS MULTICOUCHES

(30) Priorität: 21.12.1995 DE 19547943
(43) Veröffentlichungstag der Anmeldung: 21.10.1998
(73) Patentinhaber: BASF Coatings Aktiengesellschaft, 48165 Münster (DE)
(72) Erfinder: WIEMANN, Gudrun, D-48291 Telgte (DE); GROSS, Lutz, D-45721 Haltern (DE); SAPPER, Götz-Ekkehard, D-48346 Ostbevern (DE); WOLTERING, Joachim, D-48159 Münster (DE)
(74) Vertreter: Fitzner, Uwe, Dr.
(86) Internationale Anmeldenummer: EP9605693
(87) Internationale Veröffentlichungsnummer: WO9723307

(56) Entgegenhaltungen:
- US-A- 5 157 069

## Beschreibung

Die vorliegende Erfindung betrifft ein Verfahren zur Herstellung von mehrschichtigen Überzügen auf einer Substratoberfläche bei dem
(A) auf eine mit einer wäßrigen Basisbeschichtungszusammensetzung (i) beschichtete Substratoberfläche eine wäßrige Basisbeschichtungszusammensetzung (ii), die als filmbildendes Mittel eine wäßrige Polymerdispersion enthält, aufgebracht wird,
(B) auf die in Stufe (A) erhaltene Zusammensetzung eine geeignete transparente Deckbeschichtungszusammensetzung aufgebracht wird und
(C) die Basisbeschichtungszusammensetzungen (i) und (ii) zusammen mit der Deckbeschichtungszusammensetzung eingebrannt werden,
und lackierte Substrate, die nach diesem Verfahren herstellbar sind.

Aus dem Stand der Technik sind Verfahren zur Lackierung von Fahrzeug- insbesondere Automobilkarosserien bekannt, bei denen das Substrat in der Regel zuerst mit einem Elektrotauchlack und/oder Steinschlagzwischengrund, einer Füllerschicht oder einer ersten Basislackschicht, die pigmentiert sein kann, beschichtet wird und anschließend unter Verwendung eines mindestens ein Pigment enthaltenden Lackes eine Basislackschicht aufgebracht und diese Basislackschicht gegebenenfalls mit einem transparenten Lack überlackiert wird. Die so erhaltene ein- bzw. mehrschichtige Lackierung wird anschließend eingebrannt. Substrate werden insbesondere dann mit zwei Basislackschichten beschichtet, wenn bei geringen Lackdicken von etwa 20 bis 30 µm gut deckende Lackschichten erhalten werden sollen.

Der vorliegenden Erfindung liegt die Aufgabe zugrunde, ein Verfahren zur Herstellung von mehrschichtigen Überzügen sowie ein Verfahren zur Ausbesserung von mehrschichtigen Überzügen auf einer Substratoberfläche zur Verfügung zu stellen, worin durch den Einsatz einer speziellen wäßrigen Basisbeschichtungszusammensetzung bei geringen Schichtdikken gut deckende Überzüge erhalten werden, wobei erwünscht ist, daß diese sowohl für Uni- als auch Metall- bzw. Micaeffektlacke geeignet ist. Die verwendete Basisbeschichtungszusammensetzung sollte weiterhin mit üblichen Klarlacken, wie z.B. wäßrigen oder Lösemittel-haltigen Klarlacken oder Pulverklarlacken verträglich sein und diese Klarlacke sollten auf den Basislack appliziert werden können, ohne daß es im Vergleich zu konventionellen Lacksystemen zu einer Verschlechterung des Aussehens des Lacksystems kommt.

Gegenstand der vorliegenden Erfindung ist demgemäß ein Verfahren zur Herstellung eines mehrschichtigen Überzugs auf einer Substratoberfläche bei dem
(A) auf eine mit einer wäßrigen Basisbeschichtungszusammensetzung (i) beschichtete Substratoberfläche eine wäßrige Basisbeschichtungszusammensetzung (ii), die als filmbildendes Mittel eine wäßrige Polymerdispersion enthält, aufgebracht wird,
(B) auf die in Stufe (A) erhaltene Zusammensetzung eine geeignete transparente Deckbeschichtungszusammensetzung aufgebracht wird und
(C) die Basisbeschichtungszusammensetzungen (i) und (ii) zusammen mit der Deckbeschichtungszusammensetzung eingebrannt werden,
dadurch gekennzeichnet, daß die Basisbeschichtungszusammensetzung (ii) eine wäßrige Polymerdispersion enthält, enthaltend
(x) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(y) einen nicht- assoziativ wirkenden Verdicker, der ein Acrylat-Copolymer auf Basis von (C₁-C₆)-Alkyl(meth)acrylat und (Meth)acrylsäure enthält.

Ein weiterer Gegenstand der vorliegenden Erfindung ist ein Verfahren zur Ausbesserung von mehrschichtigen Lackierungen, worin
(D) eine Basislackschicht (II) mit einer wäßrigen Beschichtungszusammensetzung (ii), die als filmbildendes Mittel eine wäßrige Polymerdispersion enthält, ausgebessert wird,
(E) die in Stufe (D) erhaltene Beschichtung mit einer geeigneten transparenten Deckbeschichtungszusammensetzung beschichtet wird und
(F) die Beschichtungszusammensetzung (ii) zusammen mit der Deckschicht ausgehärtet wird,
dadurch gekennzeichnet, daß die Basisbeschichtungszusammensetzung (ii) eine wäßrige Polymerdispersion enthält, enthaltend
(x) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(y) einen nicht- assoziativ wirkenden Verdicker, der ein Acrylat-Copolymer auf Basis von (C₁-C₆)-Alkyl(meth)acrylat und (Meth)acrylsäure enthält.

Überraschenderweise wurde festgestellt, daß das erfindungsgemäße Verfahren zur Herstellung von mehrschichtigen Überzügen sich sehr gut zur Herstellung von mehrschichtigen Überzügen auf Substraten und zur Ausbesserung von mehrschichtigen Überzügen, insbesondere für Automobilkarosserien, eignet. Auf die Basisbeschichtung können beliebige transparente Lacke aufgebracht werden, beispielsweise wäßrige oder lösemittelhaltige oder auch Pulverlacke. Überzüge, die die erfindungsgemäß verwendete Basischicht enthalten, lassen sich bei Beschädigungen problemlos ausbessern.

Die in der Basisbeschichtungszusammensetzung (ii) erfindungsgemäß eingesetzte wäßrige Polymerdispersion enthält (x) ein Acrylat-Polyme sowie (y) einen Verdicker, der ein Acrylat-Coplymer enthält.

Das erfindungsgemäß eingesetzte Acrylat-Polymer der Komponente (x) kann als C₁-C₈-Alkyl(meth)acrylat-Monomereinheiten die linearen und verzweigtkettigen Derivate enthalten, wobei Methyl(meth)acrylat, Ethyl(meth)acrylat, n-Propyl- und iso-Propyl(meth)acrylat, n-Butyl- und iso-Butyl(meth)acrylat und 2-Ethylhexyl(meth)acrylat bevorzugt sind. Als weitere Monomere können auch (Meth)acrylamid-Monomere und deren Derivate enthalten sein.

Als vinylaromatische Monomere können z.B. Styrol, α-Alkylstyrol und Vinyltoluol eingesetzt werden.

Das Acrylat-Polymer kann nach aus dem Stand der Technik bekannten Verfahren, beispielsweise Emulsionspolymerisation, hergestellt werden. Vorzugsweise wird das Acrylat-Polymer in Form einer Dispersion eingesetzt. Während des Herstellverfahrens wird das Mengenverhältnis zwischen den Monomeren und dem Wasser vorzugsweise so eingestellt, daß die resultierende Dispersion einen Feststoffgehalt von 30 bis 60 Gew.-%, vorzugsweise 35 bis 60 Gew.-%, aufweist und direkt zur Herstellung der Basisbeschichtungszusammensetzung eingesetzt werden kann. Ein besonders geeignetes Acrylat-Polymer ist im Handel als wäßrige Dispersion unter der Bezeichnung Acronal 290 D (BASF AG; Ludwigshafen) erhältlich.

Zur Herstellung einer Dispersion des Acrylat-Polymers wird als Emulgator vorzugsweise ein anionischer Emulgator allein oder im Gemisch mit anderen eingesetzt.

Beispiele für anionische Emulgatoren sind die Alkalisalze von Schwefelsäurehalbestern von Alkylphenolen oder Alkoholen, ferner die Alkalisalze von Schwefelsäurehalbestern von oxethylierten Alkylphenolen oder oxethylierten Alkoholen, vorzugsweise die Alkalisalze des Schwefelsäurehalbesters eines mit 4 bis 5 Mol Ethylenoxid pro Mol umgesetzten Nonylphenols, Alkyl - oder Arylsulfonats, Natriumlaurylsulfat, Natriumlaurylethoxylatsulfat und sekundäre Natriumalkansulfonate, deren Kohlenstoffkette 8 - 20 Kohlenstoffatome enthält. Die Menge des anionischen Emulgators beträgt 0,1 bis 5,0 Gew.-%, bezogen auf die Monomeren, vorzugsweise 0,5 bis 3,0 Gew.-%. Ferner kann zur Erhöhung der Stabilität der wäßrigen Dispersionen zusätzlich ein nichtionischer Emulgator vom Typ eines ethoxylierten Alkylphenols oder Fettalkohols, z.B. ein Additionsprodukt von 1 Mol Nonylphenol und 4 bis 30 Mol Ethylenoxid in Mischung mit dem anionischen Emulgator eingesetzt werden.

Die Glasübergangstemperatur des Acrylat-Polymers liegt vorzugsweise zwischen 15°C und 35°C, besonders bevorzugt zwischen 20°C und 25°C.

Das erfindungsgemäß eingesetzte Acrylat-Polymer hat bevorzugt eine zahlenmittlere Molmasse (Bestimmung: Gelpermeationschromatographisch mit Polystyrol als Standard) von 200.000 bis 2.000.000, vorzugsweise von 300.000 bis 1.500.000.

Als Verdicker-Komponente (Rheologiehilfsmittel) (y) in der Basisbeschichtungszusammensetzung werden erfindungsgemäß Acrylat-Copolymere mit nicht-assoziativ wirkenden Gruppen eingesetzt, die als Monomereinheiten (C₁-C₆)-Alkyl(meth)acrylat und (Meth)acrylsäure enthalten. Ein bevorzugtes Copolymer enthält als Monomereinheiten (Meth)acrylsäure und mindestens zwei unterschiedliche (C₁-C₆)-Alkyl(meth)acrylatmonomere. Im Copolymer liegt die (Meth)acrylsäure bevorzugt in Mengen von 40 Gew.-% bis 60 Gew.-%, besonders bevorzugt von 46 Gew.-% bis 55 Gew.-%, bezogen auf die Menge des gesamten Copolymers, vor. Das (C₁-C₆)-Alkyl(meth)acrylatmonmer 1 ist vorzugsweise in Mengen von 30 Gew.-% bis 50 Gew.-%, insbesondere 36 Gew.-% bis 46 Gew.-%, und das (Meth)acrylatpolymer II vorzugsweise in Mengen von 1 Gew.-% bis 10 Gew.-%, insbesondere 2 Gew.-% bis 8 Gew.-%, jeweils bezogen auf die Menge des gesamten Copolymers, enthalten. Das Rheologiehilfsmittel sollte der Basisbeschichtungszusammensetzung insbesondere bei dem eingesetzten, in der Regel alkalischen pH-Wert die gewünschte Viskosität verleihen. Ein besonders bevorzugter Verdicker ist, wenn er als Dispersion vorliegt, dünnflüssig und verdickt bei neutralem bzw. basischem pH-Wert. Das Acrylat-Copolyer wird der geeigneterweise als fertige Dispersion eingesetzt. Als Emulgatoren enthalten derartige Dispersionen vorzugsweise Fettalkoholalkoxylate, insbesondere C₈-C₂₂-Fettalkoholethoxylate. Eine besonders geeignete Acrylat-Copolymer-Dispersion ist im Handel unter der Bezeichnung Viscalex HV 30 (Allied Corporation, Groß Britannien) erhältlich.

Der Verdicker ist in der erfindungsgemäß verwendeten Basisbeschichtungszusammensetzung vorzugsweise in einer Menge von 0,5 bis 5,0 Gew.-%, insbesondere etwa 0,3 bis 1,5 Gew.-%, bezogen auf den Festkörpergehalt, enthalten. Üblicherweise wird der Verdicker als Dispersion mit einer Konzentration von 15 bis 45 Gew.-%, vorzugsweise von 20 bis 35 Gew.- % eingesetzt.

Als Hilfsbindemittel kann das erfindungsgemäße Überzugsmittel auch epoxy-funktionelle und/oder carboxyl-funktionelle Bestandteile enthalten, wie übliche Glycidylverbindungen, wie z.B. Glycidylacrylat- oder Glycidylmethacrylat-Polymerisate. Als carboxyl-funktionelle Vernetzer eignen sich beispielsweise Carbonsäuren, insbesondere gesättigte, geradkettige, aliphatische Dicarbonsäuren mit 3 bis 20 C-Atomen im Molekül, wobei Dodecan-1,12-disäure bevorzugt eingesetzt wird. Zur Modifizierung der Eigenschaften können die Vernetzer auch Epoxidgruppen und Carboxylfunktionen in einer einzigen Verbindung enthalten.

Als weiteres Hilfsbindemittel kann auch Polyvinylalkohol eingesetzt werden. Es wurde festgestellt, daß durch den Zusatz von Polyvinylalkohol in einer Menge bis zu 10 Gew.-%, vorzugsweise von 1 bis 5 Gew.-%, die Verträglichkeit mit den auf der Basisbeschichtungszusammensetzung aufgebrachten Deckbeschichtungszusammensetzungen verbessert werden kann. Polyvinylalkohol wirkt Lösemittel-abstoßend, so daß in der Deckbeschichtungszusammensetzung möglicherweise enthaltenes Lösemittel oder andere Komponenten aufgrund der abstoßenden Wirkung des Polyvinylalkhols nicht in die Basisbeschichtungszusammensetzung eindringen und die Farbe verändern können.

Als weitere Vernetzer sind die auf dem Lackgebiet bekannten Vernetzer wie Melamin-Harze einsetzbar, die mit freien OH-Gruppen reagieren können.

Die Basisbeschichtungszusammensetzungen können neben den voranstehend beschriebenen Polymeren noch weitere verträgliche wasserverdünnbare Harze enthalten, wie z.B. Aminoplastharze, Polyester, Polyurethane sowie acrylierte Polyurethane und urethanisierte Acrylate, die zur Erreichung bestimmter lacktechnischer Eigenschaften wie Haftung und im allgemeinen als Anreibeharze für Pigmente dienen.

Das Hilfsbindemittel und/oder der Vernetzer können in einer Menge bis zu 10 Gew.-%, insbesondere von 0,5 bis 10 Gew.-% eingesetzt werden.

Die erfindungsgemäß eingesetzten Basisbeschichtungszusammensetzungen (ii) weisen im allgemeinen einen Festkörpergehalt von etwa 15 bis 60 Gew.-% auf. Der Festkörpergehalt variiert mit dem Verwendungszweck der Beschichtungszusammensetzungen. Für Metalliclacke liegt er beispielsweise bevorzugt bei 17 bis 25 Gew.-%. Für unifarbige Lacke liegt er höher, beispielsweise bei 30 bis 45 Gew.-%.

Zur Neutralisierung der Komponenten (x) und (y) können Ammoniak und/oder Amine (insbesondere Alkylamine), Aminoalkohole und cyclische Amine, wie Di- und Triethylamin, Aminomethylpropanol, Dimethylaminoethanolamin, Diisopropanolamin, Morpholin, N-Alkylmorpholin, eingesetzt werden. Für die Neutralisation werden leicht flüchtige Amine bevorzugt. Das wäßrige Überzugsmittel wird üblicherweise auf einen pH-Wert zwischen 6 und 9, vorzugsweise 7 bis 8,5 eingestellt.

Die Basisbeschichtungszusammensetzung (ii) kann organische Lösemittel in einer Menge bis zu 15 Gew.-% enthalten. Als organische Lösemittel sind beispielsweise Naphthaline, Benzine und Alkohole geeignet. Als weitere flüssige Komponenten können die erfindungsgemäßen Basislacke Alkylenglykole, wie Ethylenglykol, Propylenglykol, Butylenglykol, Butandiol-1,4, Hexandiol-1,6, Neopentylglykol und andere Diole, wie Dimethylolcyclohexan, enthalten.

Als Pigmente kann die Basisbeschichtungszusammensetzung (ii) übliche, zur Lackierung von Automobilkarosserien eingesetzte Pigmente enthalten, wie z.B. Effektpigmente sowie organische und anorganische farbgebende Pigmente.

Beispiele für geeignete Effektpigmente sind handelsübliche Aluminiumbronzen, die gemäß DE-OS 36 36 183 chromatierten Aluminiumbronzen, handelsübliche Edelstahlbronzen sowie andere übliche Metallplättchen und Metallflockenpigmente sowie nichtmetallische Effektpigmente, wie z.B. Perlglanz- bzw. Interferenzpigmente.

Beispiele für geeignete farbgebende Pigmente auf anorganischer Basis sind Titandioxid, Eisenoxide und Ruß. Beispiele für farbgebende Pigmente auf organischer Basis sind Indanthrenblau, Cromophthalrot, Irgazinorange, Sicotransgelb, Heliogengrün u.ä.

Ferner können Korrosionsschutzpigmente, wie z.B. Zinkphospat, enthalten sein.

Zusätzlich kann die Basisbeschichtungszusammensetzung (ii) auch auf dem Gebiet der Lackchemie übliche Füllstoffe enthalten. Hierzu zählen Kieselsäure, Magnesiumsilikat, Talkum, Titandioxid und Bariumsulfat.

Der Anteil der Pigmente und Füllstoffe im erfindungsgemäßen Überzugsmittel kann insgesamt 5 bis 25 Gew.-%, bezogen auf den Festkörpergehalt, betragen. Das Pigment kann in beliebiger Weise zugesetzt werden, z.B. als wäßrige Slurry oder als Paste. Die Pigmente können beispielsweise mit einem Anreibeharz (Hilfsbindemittel, Dispergierhilfsmittel und Wasser) angerieben werden. Bei unifarbenen Lacken ist es bevorzugt, die Pigmente in Dispergierhilfsmittel und Wasser aufzuschlämmen. Werden Aluminium bzw. Flakes eingesetzt, so werden diese ggf. in einem Gemisch aus Wasser und Tensid sowie evtl. Lösemittel aufgeschlämmt oder im Hauptbindemittel oder in einem anderen Hilfsbindemittel angerieben. Die Pigmentpasten sollten möglichst ohne Lösemittel hergestellt werden.

Die Menge der Komponente (x) kann in Abhängigkeit vom eingesetzten Pigment variieren. Sind die Pigmente organische und/oder anorganische farbgebende Pigmente, so ist die Komponente A vorzugsweise in einer Menge von 25 bis 50 Gew.-%, bezogen auf den Festkörpergehalt, enthalten. Sind die Pigmente Effektpigmente, ist die Komponente A vorzugsweise in einer Menge von 15 bis 30 Gew.-%, bezogen auf den Festkörpergehalt, enthalten.

Als weitere Komponente kann die Basisbeschichtungszusammensetzung Filmbildehilfsmittel enthalten. Als Filmbildehilfsmittel kommen Dicarbonsäuredialkylester, 1,2-Propylenglykol, hochsiedende Benzine und Naphthaline in Betracht, die einen Siedepunkt über 100°C, vorzugsweise über 140°C aufweisen.

Die Basisbeschichtungszusammensetzung kann gegebenenfalls noch weitere Hilfsmittel und Additive enthalten. Beispiele hierfür sind Katalysatoren, Hilfsstoffe, Entschäumungsmittel, Dispersionshilfsmittel, Netzmittel, vorzugsweise carboxy-funktionelle Dispergiermittel, Antioxidantien, UV-Absorber, Radikalfänger, Verlaufsmittel, Biozide und/oder Wasserrückhaltemittel.

Die Basisbeschichtungszusammensetzung (ii) wird auf eine mit einer wäßrigen Basisbeschichtungszusammensetzung (i) beschichtete Substratoberfläche aufgebracht. Als wäßrige Basisbeschichtungszusammensetzung (i) wird vorzugsweise eine Lackschichtformulierung verwendet, die a) als Bindemittel ein wasserverdünnbares Polyurethanharz enthält, das eine Säurezahl von 10 bis 60 und ein zahlenmittleres Molekulargewicht von 4000 bis 25000 aufweist und herstellbar ist, indem aa) ein Polyester- und/oder Polyetherpolyol mit einem zahlenmittleren Molekulargewicht von 400 bis 5000 oder ein Gemisch aus solchen Polyesterund/oder Polyetherpolyolen, bb) ein Polyisocyanat oder einem Gemisch aus Polyisocyanaten, cc) eine Verbindung, die mindestens eine gegenüber Isocyanatgruppen reaktive und mindestens eine zur Anionenbildung befähigte Gruppe im Molekül aufweist, oder ein Gemisch aus solchen Verbindungen und ggf. dd) eine Hydroxyl- und/oder Aminogruppen enthaltende organische Verbindung mit einem Molekulargewicht von 40 bis 400 oder ein Gemisch aus solchen Verbindungen miteinander umgesetzt werden und das entstandene Reaktionsprodukt wenigstens teilweise neutralisiert wird, sowie b) Pigmente und/oder Füllstoffe enthält, wobei das Verhältnis von Bindemittel zu Pigment zwischen 0,5 : 1 und 1,5:1 liegt.

Für diese Formulierung ist es besonders vorteilhaft, wenn eine Lackschichtformulierung auf Basis einer physikalisch trocknenden Polyurethandispersion ohne Polyester und Aminoplastharze hergestellt wird. Es wurde festgestellt, daß die Anwendung eines nur aus Polyurethanharzen und Pigmenten bestehenden Lackes zu einem Material führt, das als Füllerund Steinschlagzwischengrundschicht besonders gut verwendbar ist, da es unerwartet stabil gegen mechanische Beanspruchungen, insbesondere Steinschlag und Stöße ist.

Die Komponente (a) kann aus aa), bb), cc) und ggf. dd) nach den dem Fachmann gut bekannten Methoden der Polyurethanchemie hergestellt werden (vgl. z.B. US-PS 4719132, DE-OS 3628124, EP-A-89497, EP-A-256540 und WO 87/03829). Als Komponente (aa) können gesättigte und ungesättigte Polyester- und/oder Polyetherpolyole, insbesondere Polyester- und/oder Polyetherdiole mit einem zahlenmittleren Molekulargewicht von 400 bis 5000 eingesetzt werden. Geeignete Polyetherdiole sind z.B. Polyetherdiole der allgemeinen Formel H(-O-(CHR¹)ₙ-)ₘOH, wobei R¹ = Wasserstoff oder ein niedrigerer, ggf. substituierter Alkylrest ist, n=2 bis 6, bevorzugt 3 bis 4 und m=2 bis 100, bevorzugt 5 bis 50 ist. Als Beispiele werden lineare oder verzweigte Polyetherdiole, wie Poly(oxyethylen)glykole, Poly(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im Molmassenbereich Mₙ von 400 bis 3000.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid an ungesättigte Fettsäuren anwesend sein.

Es können auch Polyesterdiole eingesetzt werden die durch Umsetzung eines Lactons mit einem Diol erhalten werden. Diese zeichnen sich durch die Gegenwart von endständigen Hydroxylgruppen und wiederkehrenden Polyesteranteilen der Formel (-CO-(CHR²)ₙCH₂-O) aus. Hierbei ist n bevorzugt 4 bis 6 und der Substituent R² Wasserstoff, ein Alkyl-, Cycloalkyl- oder Alkoxy-Rest.

Die Substituenten können bis zu 18 Kohlenstoffatome aufweisen. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ε-Caprolacton, bei dem n den Wert 4 hat und alle R-Substituenten Wasserstoff sind, bevorzugt. Die Umsetzung mit Lacton wird durch niedermolekulare Polyole, wie Ethylglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden.

Als höhermolekulare Diole eignen sich auch Polylactamdiole, die durch Reaktion von beispielsweise ε-Caprolactam mit niedermolekularen Diolen hergestellt wird.

Als Komponente bb) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.

Aufgrund ihrer guten Beständigkeit gegenüber ultraviolettem Licht ergeben (cyclo)aliphatische Polyisocyanate Produkte mit geringer Vergilbungsneigung. Beispiele hierfür sind Isophorondiisocyanat, Cyclopentylendiisocyanat, sowie Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind Verbindungen der Formel OCN-(CR³₂)ᵣ -NCO, worin r eine ganze Zahl von 2 bis 20, insbesondere 6 bis 8 ist und R³, das gleich oder verschieden sein kann, Wasserstoff oder einen niedrigeren Alkylrest mit 1 bis 8 C-Atomen, vorzugsweise 1 bis 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexylmethandiisocyanat.

Die Komponente bb) muß hinsichtlich der Funktionalität der Polyisocyanate so zusammengesetzt sein, daß kein vernetztes Polyurethanharz erhalten wird. Die Komponente bb) kann neben Diisocyanaten auch einen Anteil an Polyisocyanaten mit Funktionalitäten über zwei - wie z.B. Triisocyananten - enthalten. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann ggf. durch Zusatz von Monoisocyanaten gesenkt werden. Beispiele für solche kettenabbrechenden Monoisocyanate sind Phenylisocyanat, Cyclohexylisocyanat und Stearylisocyanat.

Um die Wasserverdünnbarkeit der eingesetzten Polyurethanharze zu gewährleisten, müssen zur Anionenbildung befähigte Gruppen in die Polyurethanmoleküle eingebaut werden. Die zur Anionenbildung befähigten Gruppen sorgen nach ihrer Neutralisation dafür, daß das Polyurethanharz in Wasser stabil dispergiert werden kann. Das Polyurethanharz a) soll eine Säurezahl von 10 bis 60, vorzugsweise 20 bis 35 aufweisen. Aus der Säurezahl kann die in die Polyurethanmoleküle einzuführende Menge an zur Anionenbildung befähigten Gruppen berechnet werden.

Die Einführung von zur Anionenbildung befähigten Gruppen in die Polyurethanmoleküle erfolgt über den Einbau von Verbindungen cc) in die Polyurethanmoleküle, die mindestens eine gegenüber Isocyanatgruppen reaktive und eine zur Anionenbildung befähigte Gruppe im Molekül enthalten.

Als Komponente cc) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente cc) können beispielsweise Alkansäuren mit zwei Substituenten an α-ständigen Kohlenstoffatomen eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiel für die Komponente cc) sind Dihydroxypropionsäure, Dihydroxybernsteinsäure und Dihydroxybenzoesäure. Eine besonders bevorzugte Gruppe von Alkansäuren sind die a,a-Dimethylolalkansäuren der allgemeinen Formel R⁴-C(CH₂ OH) ₂ COOH, wobei R⁴ für ein Wasserstoffatom oder eine Alkylgruppe mit bis zu etwa 20 Kohlenstoffatomen steht.

Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsäure. Aminogruppenhaltige Verbindungen sind beispielsweise α,δ-Diaminovaleriansäure, 3,4-Diaminobenzoesäure, 2,4-Diaminotoluolsulfonsäure und 2,4-Diamino-diphenylethersulfonsäure.

Die vorzugsweise eingesetzten Polyurethanharze a) können ggf. unter Mitverwendung von Hydroxyl- und/oder Aminogruppen enthaltenden organischen Verbindungen mit einem Molekulargewicht von 40 bis 400, oder einem Gemisch aus solchen Verbindungen hergestellt werden (Komponente dd)). Der Einsatz der Komponente dd) führt zur Molekulargewichtserhöhung der Polyurethanharze. Als Komponente dd) können beispielsweise Polyole mit bis zu 20 Kohlenstoffatome je Molekül, wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden.

Die Polyole werden im allgemeinen in Mengen von bis zu 30 Gew.-%, vorzugsweise 2 bis 20 Gew.-%, bezogen auf die eingesetzte Menge an Komponente aa) und dd) eingesetzt. Als Komponente dd) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methylendiamin, Isophorondiamin, 4,4'-Diaminodicyclohexylmethan und Aminoethylethanolamin. Bevorzugte Diamine sind Hydrazin, Alkyl- oder Cycloalkytdiamine, wie Propylendiamin und 1-Amino-3-aminomethyl-2,5,5-trimethylcyclohexan. Es können auch Polyamine als Komponente dd) eingesetzt werden, die mehr als zwei Aminogruppen im Molekül enthalten. In diesen Fällen ist jedoch z.B. durch Mitverwendung von Monoaminen darauf zu achten, daß keine vernetzten Polyurethanharze erhalten werden. Solche brauchbaren Polyamine sind Diethylentriamin, Triethylentetramin, Dipropylentriamin und Dibutylentriamin. Als Beispiel für ein Monoamin wird Ethylhexylamin genannt.

Die Herstellung der Komponente a) gehört zum Stand der Technik und wird z.B. in der US-PS 4719132, DE-OS 3628124, EP-A-89497, EP-A-256540 und WO 87/03829 ausführlich beschrieben.

Zur Neutralisierung der Komponente a) können Ammoniak und/oder Amine (insbesondere Alkylamine), Aminoalkohole und cyclische Amine, wie Di- und Triethylamin, Dimethylaminoethanolamin, Diisopropanolamin, Morpholin, N-Alkylmorpholin, eingesetzt werden. Für die Neutralisation werden leicht flüchtige Amine bevorzugt.

Wichtig ist insbesondere die Beachtung des Gewichtsverhältnisses von Bindemittel zu Pigment bzw. Füllstoff. Dies liegt vorzugsweise zwischen 0,5:1 und 1,5:1. Bevorzugt wird der Bereich zwischen 0,6:1 und 1,2:1.

Bewährt hat sich als Pigment bzw. Füllstoff Talkum. Dessen Anteil in der Gesamtmenge an Pigmenten und Füllstoffen liegt bei 20 bis 80 Gew.-%. Bevorzugt wird der Bereich von 30 bis 70 Gew.-%.

Es ist ggf. möglich in geringen Mengen Aminoplaste zuzusetzen. Diese sollten nicht höher als 10 Gew.-% bezogen auf die Gesamtmenge der Basisbeschichtungszusammensetzung (i) ausmachen. Besser ist es, unter 5 Gew.-% zu bleiben. Derartige Harze sind dem Fachmann gut bekannt und werden von vielen Firmen als Verkaufsprodukte angeboten. Aminoplastharze sind Kondensationsprodukte aus Aldehyden, insbesondere Formaldehyd und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Vorzugsweise werden wasserverdünnbare Aminoplastharze, insbesondere wasserverdünnbare Melamin-Formaldehydharze eingesetzt.

Polyisocyanatvernetzer können ebenfalls in der Lackschichtformulierung enthalten sein. Deren Anteile liegen regelmäßig unter 30 Gew.-%, vorzugsweise unter 10 Gew.-%. Die Vernetzerreaktivität ist im allgemeinen niedriger als 130 Grad Celsius.

Der Einsatz der voranstehend beschriebenen vorzugsweise einsetzbaren Beschichtungszusammensetzung (i) erlaubt erheblich niedrigere Schichtdicken als vergleichbare Materialien nach dem Stand der Technik. Diese liegen weit unter 35 um, d.h. regelmäßig unter 15 µm. Trotz dieser geringen Schichtdicke wird eine Beständigkeit gegen Steinschlag erreicht, die Schichtdicken von 35 µm und mehr entspricht.

Auf die Basisbeschichtungszusammensetzung (i) kann, ggf. nach Vortrocknung bei ca. 70°C, die Basisbeschichtungszusammensetzung (ii) und anschließend eine transparente Deckbeschichtung aufgebracht werden. Der so erhaltene Überzug wird anschließend in an sich bekannterweise, vorzugsweise bei einer Temperatur zwischen 130 und 160°C, eingebrannt. Bei einer farblichen Abstimmung Basisbeschichtungszusammensetzung (i) auf die Farbe der Basisbeschichtungszusammensetzung (ii) ist es sogar möglich, die Schichtdicken noch weiter zu reduzieren, ohne daß es zu einer Qualitätseinbuße kommt.

Die beschriebene Basisbeschichtungszusammensetzung (i) kann neben den genannten Stoffen alle in der Lacktechnologie an sich bekannten Hilfs- und Zusatzmittel, wie sie für die Basisbeschichtungszusammensetzung (ii) genannt wurden, enthalten.

Nach der Applikation der Basisbeschichtungszusammensetzung (i) wird die Basisbeschichtungszusammensetzung (ii) in an sich bekannter Weise, beispielsweise durch Spritzen, Streichen, Tauchen, Fluten, Rakeln oder Walzen auf das Substrat, wie z.B. Metall, Kunststoff, Holz oder Glas aufgebracht.

Die Basisbeschichtungszusammensetzung (ii) kann gegebenenfalls vor Aufbringen auf die Beschichtung (i) noch mit Wasser zur Einstellung des Festkörpergehaltes, Lösungsmittel oder Rheologiehilfsmittel zur Einstellung der anwendungstechnischen Eigenschaften sowie ggf. eine Base zur pH-Regulierung versetzt werden. Sollte die Viskosität noch nicht in dem gewünschten Bereich liegen, so kann erneut Rheologiehilfsmittel (y) oder weiterer Verdicker, ggf. in einer Menge von 0,01 bis 0,06 Gew.-%, bezogen auf den Festkörpergehalt, zugesetzt werden.

Die in Stufe (A) auf das Substrat aufgebrachten Basisbeschichtungszusammensetzungen werden in Stufe (B) des erfindungsgemäßen Verfahrens mit einer geeigneten transparenten Deckbeschichtungszusammensetzung überlackiert. Vor dem Auftragen der transparenten Deckbeschichtung läßt man das Überzugsmittel vorteilhafterweise kurz abdunsten, vorzugsweise 1 bis 15 Minuten, insbesondere 4 bis 8 Minuten, bei einer Temperatur von 60 bis 100°C, vorzugsweise von 70 bis 85°C. Der Zeitraum des Abdunstens hängt von der Temperatur ab und ist über weite Bereiche einstellbar.

Besonders beständige mehrschichtige Überzüge können erhalten werden, wenn das in Stufe (A) erhaltene Substrat angetrocknet wird. Das Antrocknen wird vorzugsweise bis zu einem Grad durchgeführt, daß eine ausreichende Verfilmung bzw. Vernetzung der Basisschicht (ii) vorliegt, so daß Wasser und/oder Lösungsmittel, die ggf. in der in Stufe (B) aufgebrachten Deckbeschichtungszusammensetzung enthalten sind, nicht in die Basischicht (ii) diffundieren können.

Als transparente Deckbeschichtungszusammensetzung können alle üblichen Deckbeschichtungen aufgebracht werden. Bevorzugt werden die auf dem Gebiet der Lackchemie verwendeten Klarlacke, wie z.B. Klarlacke auf Wasser- oder Lösemittelbasis, Pulverklarlacke, Pulverslurry-Klarlacke, lösemittelhaltige und wäßrige Zweikomponenten-Klarlacke usw. eingesetzt werden, wobei Pulverslurry-Klarlacke besonders bevorzugt sind.

Die transparente Deckbeschichtungszusammensetzung kann nach üblichen im Stand der Technik bekannten Verfahren aufgebracht werden.

Ein weiterer Gegenstand der vorliegenden Erfindung ist demgemäß ein mehrschichtig beschichtetes Substrat, wobei der Überzug auf die Substratoberfläche aufgebracht wird, indem
(A) auf eine mit einer wäßrigen Beschichtungszusammensetzung (i) beschichtete Substratoberfläche eine wäßrige Beschichtungszusammensetzung (ii), die als filmbildendes Mittel eine wäßrige Polymerdispersion enthält, aufgebracht wird,
(B) auf die in Stufe (A) erhaltene Zusammensetzung eine geeignete transparente Deckbeschichtungszusammensetzung aufgebracht wird und
(C) die Beschichtungszusammensetzungen (i) und (ii) zusammen mit der Deckbeschichtungszusammensetzung eingebrannt werden,
dadurch gekennzeichnet, daß die Basisbeschichtungszusammensetzung (ii) eine wäßrige Polymerdispersion enthält, enthaltend
(x) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(y) einen nicht- assoziativ wirkenden Verdicker, der ein Acrylat-Copolymer auf Basis von (C₁-C₆)-Alkyl(meth)acrylat und (Meth)acrylsäure enthält.

Bei der Ausbesserung von mehrschichtigen Lackierungen ist es möglich, die Basisbeschichtungszusammensetzung ohne spezielle Hilfsmittel auf die auszubessernde Substratoberfläche aufzutragen. Die Beschichtungszusammensetzung kann bei Umgebungstemperatur ausgehärtet werden. Bei Härtung bei Umgebungstemperatur verlängert sich die obengenannte Einbrennzeit entsprechend, sie liegt unter Einschluß des verwendeten 2-Komponenten-Klarlacks etwa zwischen 15 und 24 Stunden. Ein besonderes Hilfsmittel bzw. eine spezielle Vorrichtung zum Aushärten dieser Beschichtungszusammensetzung ist somit nicht erforderlich.

### Beispiele

### 1. Herstellung der ersten Basisbeschichtungszusammensetzung

### 1.1 Polyurethanharz I

In einem trockenen Reaktionskessel mit Thermometer und Rückflußkühler werden unter Stickstoff 480,3 g einer 73 %-igen Lösung eines Polyesterpolyols (Säurezahl: 3,5 bis 4,0, hergestellt aus 39,5 Gewichtsteilen Pripol® 1013 (Dimerfettsäure, Hersteller: Unichema), 21,7 Gewichtsteilen Hexandiol-1,6 und 11,7 Gewichtsteilen Isophthalsäure) in Methylethylketon, 31,4 g Dimethylolpropionsäure, 169,1 g Dicyclohexylmethandiisocyanat (Desmodur^{R} W, Hersteller: Bayer AG), 6,5 g Neopentylglykol und 56,2 g Methylethylketon eingewogen und auf 85 Grad C erwärmt. Diese Temperatur wird so lange gehalten, bis ein NCO-Gehalt von 1,11 % erreicht ist. Nach Abkühlen auf 78 Grad C wird mit 17,8 g Trimethylolpropan und 91,3 g Methylethylketon versetzt. Sobald eine mit N-Methylpyrrolidon im Gewichtsverhältnis von 1:1 verdünnte Probe der Reaktionsmischung eine Viskosität zwischen 12 und 15 dPas aufweist werden 57,6 g Butyldiglykol zu dem Reaktionsgemisch gegeben und das Rektionsgemisch noch 1 Stunde lang bei 78 Grad C gehalten. Zur Überführung des so hergestellten Polyurethanharzes in eine wasserverdünnbare Form werden 11,7 g Dimethylethanolamin und 1020 g destilliertes Wasser zugegeben. Aus der so erhaltenen wäßrigen Dispersion wird anschließend das Methylethylketon bei 50 bis 60 Grad C im Vakuum abdestilliert. Dann wird der pH-Wert der Dispersion mit Dimethylethanolamin auf 7,2 und der Feststoffgehalt der Dispersion mit destilliertem Wasser auf 36,7 Gew.-% eingestellt.

### 1.2. Herstellung der Lacke

Gemäß den in Tabelle 1 angegebenen Gewichtsteilen wird eine der oben beschriebenen wäßrigen Polyurethandispersionen mit entionisiertem Wasser, einem handelsüblichen Verlaufsmittel auf Basis eines wasserverdünnbaren Acrylatharzes, mit einer Lösung eines handelsüblichen Antischaummittels auf Basis eines ungesättigten verzweigten Diols, gelöst in Butyldiglykol sowie N,N-Dimethylethanolamin versetzt und mit nachbehandeltem Titandioxid vom Rutiltyp und oberflächenbehandeltem Talkum und einem handelsüblichen Flammruß angepastet. Diese Mischung wird in eine diskontinuierliche Laborsandmühle gefüllt und dispergiert, bis eine Feinheit von max. 10 µm im Grindometer nach Hegmann erreicht ist.

Aus den Dispergiermischungen werden dann unter Zusatz von weiterer Polyurethanharzdispersion und Butyldiglykol wäßrige Lacke hergestellt,die mit N,N-Dimethylethanolamin auf einem pH-Wert von 7,2 bis 7,5 und mit deionisiertem Wasser auf eine Spritzviskosität von 33 sec (DIN 4) eingestellt werden.

**Tabelle 1**

| | **wäßriger Lack I** | **wäßriger Lack II** | **wäßriger Lack III** |
|---|---|---|---|
| Polyurethandispersion I | 30,00 | 30,00 | 30,00 |
| Verlaufsmittel | 0,60 | 0,60 | 0,60 |
| entionisiertes Wasser | 10,00 | 12,00 | 10,00 |
| Antischaummittel | 2,00 | 2,00 | 2,00 |
| N, N-Dimethylethanolamin | 0,10 | 0,10 | 0,10 |
| Titandioxid | 5,00 | 1,00 | 5,00 |
| Talkum | 10,00 | 10,00 | 10,00 |
| Blanc Fixe(Sachtleben) | 4,00 | 0,00 | 4,00 |
| Bayferrox 180 (Bayer) | 0,00 | 2,00 | 0,00 |
| Bayferrox 130 (Bayer) | 0,00 | 4,00 | 0,00 |
| Paliogenmarron L4020 (BASF) | 0,00 | 2,00 | 0,00 |
| Aerosil R972 (Degussa) | 0,20 | 0,20 | 0,20 |
| Flammruß | 0,50 | 0,20 | 0,50 |
| Dispergiermischung | 62,40 | 64,10 | 62,40 |
| Polyurethanharzdispersion I | 34,00 | 34,00 | 32,00 |
| Cymel 327 (Cyanamid) | 0,00 | 0,00 | 2,00 |
| Butyldiglykol | 2,00 | 1,90 | 2,00 |
| deionisiertes Wasser | 1,60 | 0,00 | 1,60 |

### 2. Herstellung der zweiten Basisbeschichtungszusammensetzung

### Beispiel 2.1

A. In einem Reaktionsgefäß wurden 22 Gewichtsteile Wasser, 2 Gewichtsteile Solvesso® 200 (C₁₀-C₁₃-Aromatengemisch) und 1 Gewichtsteil Butylglykol vorgelegt. Unter Rühren wurden 30 Gewichtsteile Gewichtsteile Acronal 290 D (wäßrige Dispersion, Festkörpergehalt 50,0 %) zugegeben.
B. Zu dem in A erhaltenen Gemisch wurde langsam ein Gemisch aus 7,6 Gewichtsteilen Wasser und 2 Gewichtsteilen Viscalex HV 30 (Festkörpergehalt 30,6 %) gegeben.

Der pH-Wert des erhaltenen Gemisches wurde mit Dimethylethanolamin (DMEA) auf 8,0 eingestellt.
C. In einem separaten Mischer wurde eine Mischung aus 5 Gewichtsteilen Aluminiumflakes und 5 Gewichtsteilen Butylglykol glatt gerührt.

Unter starkem Rühren wurde die in C. erhaltene Aluminiumaufschlämmung portionsweise in das in B. erhaltene Gemisch gegeben.

Die Viskosität des erhaltenen Lackes wurde mit 25 Gewichtsteilen Wasser auf 110 mPas eingestellt. Der Festkörpergehalt betrug 18,85 %.

### Beispiel 2.2

A. In einem Reaktionsgefäß wurden 22 Gewichtsteile Wasser, 2 Gewichtsteile Solvesso® 200 (C₁₀-C₁₃-Aromatengemisch) und 1 Gewichtsteil Butylglykol vorgelegt. Unter Rühren wurden 25 Gewichtsteile Gewichtsteile Acronal 290 D (wäßrige Dispersion, Festkörpergehalt 50,0 %) zugegeben.
B. Zu dem in A erhaltenen Gemisch wurde langsam ein Gemisch aus 7,6 Gewichtsteilen Wasser und 2 Gewichtsteilen Viscalex HV 30 (Festkörpergehalt 30,6 %) gegeben.

Der pH-Wert des erhaltenen Gemisches wurde mit 0,4 Gewichtsteilen Dimethylethanolamin (DMEA) auf 8,0 eingestellt.
C. In einem separaten Mischer wurde eine Mischung aus 5 Gewichtsteilen Aluminiumflakes und 5 Gewichtsteilen Butylglykol glatt gerührt.
D. In einem weiteren separaten Mischer wurden 5 Gewichtsteile eines Pulverklarlackes auf Basis eines Glycidylmethacrylat-haltigen Bindemittels und Dodecandisäure in 25 Gewichtsteilen Wasser dispergiert und auf eine Teilchengröße von kleiner als 5 µm gemahlen.

Zu der in D erhaltenen Dispersion wurden unter starkem Rühren das in B erhaltene Gemisch eingerührt.

Anschließend wurde die in C erhaltene Aluminiumaufschlämmung portionsweise in das erhaltene Gemisch gegeben.

Die Viskosität des erhaltenen Lackes wurde mit 25 Gewichtsteilen Wasser auf 110 mPas eingestellt. Der Festkörpergehalt betrug 18,35 %.

### Beispiel 2.3

Es wurde nach der in Beispiel 2 beschriebenen Verfahrensweise eine Lackzubereitung hergestellt, mit der Ausnahme, daß in Schritt D 10 Gewichtsteile eines Pulverklarlackes auf Basis eines Glycidylmethacrylat-haltigen Bindemittels und Dodecandisäure in 20 Gewichtsteilen Wasser dispergiert wurden.

Der Festkörpergehalt betrug 20,35 %.

### Beispiel 2.4

A. In einem Reaktionsgefäß wurden 22 Gewichtsteile Wasser, 2 Gewichtsteile Solvesso® 200 (C₁₀-C₁₃-Aromatengemisch) und 1 Gewichtsteil Butylglykol vorgelegt. Unter Rühren wurden 30 Gewichtsteile Gewichtsteile Acronal 290 D (wäßrige Dispersion, Festkörpergehalt 50,0 %) zugegeben.
B. Zu dem in A erhaltenen Gemisch wurde langsam ein Gemisch aus 7,6 Gewichtsteilen Wasser und 2 Gewichtsteilen Viscalex HV 30 (Festkörpergehalt 30,6 %) gegeben.

Der pH-Wert des erhaltenen Gemisches wurde mit 0,4 Gewichtsteilen Dimethylethanolamin (DMEA) auf 8,0 eingestellt.
C. In einem separaten Mischer wurde eine Mischung aus 5 Gewichtsteilen Aluminiumflakes und 5 Gewichtsteilen Butylglykol glatt gerührt.
D. In einem weiteren separaten Mischer wurden 10 Gewichtsteile eines Polyesters, der erhalten wurde aus 9,8 Gew.-% Neopentylglykol, 6,2 Gew.-% Hexahydrophthalsäure, 22,9 Gew.-% Pripol® 1013 (Dimerfettsäure, Handelsprodukt der Fa. Unichema), 11,1 Gew.-% Hexandiol und 2,0 Gew.-% Xylol als Lösungsmittel, und 2,2 Gewichtsteile Melamin Cymel® 303 (Cyanamid) in 12,8 Gewichtsteilen Wasser dispergiert
.

Zu der in D erhaltenen Dispersion wurden unter starkem Rühren das in B erhaltene Gemisch eingerührt.

Anschließend wurde die in C erhaltene Aluminiumaufschlämmung portionsweise in das Gemisch erhaltene Gemisch gegeben.

Der Festkörpergehalt des Lackes betrug 26,83 %.

### Beispiel 2.5

A. In einem Reaktionsgefäß wurden 22 Gewichtsteile Wasser, 2 Gewichtsteile Lusolvan FBH® (Handelsprodukt der BASF AG, Ludwigshafen) und 1 Gewichtsteil Butylglykol vorgelegt. Unter Rühren wurden 30 Gewichtsteile Gewichtsteile Acronal 290 D (wäßrige Dispersion, Festkörpergehalt 50,0 %) zugegeben.
B. Zu dem in A erhaltenen Gemisch wurde langsam ein Gemisch aus 7,6 Gewichtsteilen Wasser und 2 Gewichtsteilen Viscalex HV 30 (Festkörpergehalt 30,6 %) gegeben.

Der pH-Wert des erhaltenen Gemisches wurde mit Dimethylethanolamin (DMEA) auf 8,0 eingestellt.

C. Zu dem in Schritt B erhaltenen Gemisch wurde 30 Gewichtsteile einer Irgazinrot® DPP BO-Paste (Pigmentgehalt 43,2 Gew.-%) gegeben und glattgerührt.

Die Viskosität des erhaltenen Lackes wurde mit 5 Gewichtsteilen Wasser auf 110 mPas eingestellt.

### Beispiel 2.6

A. In einem Reaktionsgefäß wurden 22 Gewichtsteile Wasser, 2 Gewichtsteile Lusolvan FBH® (Handelsprodukt der BASF AG, Ludwigshafen) und 1 Gewichtsteil Butylglykol vorgelegt. Unter Rühren wurden 25 Gewichtsteile Gewichtsteile Acronal 290 D (wäßrige Dispersion, Festkörpergehalt 50,0 %) zugegeben.

B. Zu dem in A erhaltenen Gemisch wurde langsam ein Gemisch aus 7,6 Gewichtsteilen Wasser und 2 Gewichtsteilen Viscalex HV 30 (Festkörpergehalt 30,6 %) gegeben.

Der pH-Wert des erhaltenen Gemisches wurde mit Dimethylethanolamin (DMEA) auf 8,0 eingestellt.

C. In einem separaten Mischer wurden 28,79 Gewichtsteile einer Irgazinrot® DPP BO-Paste (Pigmentgehalt 43,2 Gew.-%), 1,17 Gewichtsteile Disperbyk® 190 (Dispergierhilfsmittel) und 0,03 Gewichtsteile Viscalex HV 30 (Festkörpergehalt 30,6 %) dispergiert und auf eine Teilchengröße unter 5µm gemahlen.

D. In einem weiteren separaten Mischer wurden 5 Gewichtsteile Gewichtsteile eines Pulverklarlackes auf Basis eines Glycidylmethacrylat-haltigen Bindemittels und Dodecandisäure in 25 Gewichtsteilen Wasser dispergiert und auf eine Teilchengröße von kleiner als 5 µm gemahlen.

Zu der in D erhaltenen Dispersion wurden unter starkem Rühren das in B erhaltene Gemisch eingerührt.

Anschließend wurde die in C erhaltene Pigmentpaste portionsweise in das erhaltene Gemisch gegeben.

Der Festkörpergehalt betrug 28,06 %.

### Beispiel 2.7

Die in Beispiel 6 beschriebene Verfahrensweise wurde wiederholt, außer daß in Schritt A 20 Gewichtsteile Gewichtsteile Acronal 290 D (wäßrige Dispersion, Festkörpergehalt 50,0 %) und in Schritt D 10 Gewichtsteile Gewichtsteile eines Pulverklarlackes auf Basis eines Glycidylmethacrylat-haltigen Bindemittels und Dodecandisäure eingesetzt wurden.

### Beispiel 2.8

A. In einem Reaktionsgefäß wurden 22 Gewichtsteile Wasser, 2 Gewichtsteile Lusolvan FBH® (Handelsprodukt der BASF AG, Ludwigshafen) und 1 Gewichtsteil Butylglykol vorgelegt. Unter Rühren wurden 15 Gewichtsteile Gewichtsteile Acronal 290 D (wäßrige Dispersion, Festkörpergehalt 50,0 %) zugegeben.

B. Zu dem in A erhaltenen Gemisch wurde langsam ein Gemisch aus 7,6 Gewichtsteilen Wasser und 2 Gewichtsteilen Viscalex HV 30 (Festkörpergehalt 30,6 %) gegeben.

Der pH-Wert des erhaltenen Gemisches wurde mit Dimethylethanolamin (DMEA) auf 8,0 eingestellt.

C. In einem separaten Mischer wurden 28,79 Gewichtsteile einer Irgazinrot® DPP BO-Paste (Pigmentgehalt 43,2 Gew.-%), 1,17 Gewichtsteile Disperbyk® 190 (Dispergierhilfsmittel) und 0,03 Gewichtsteile Viscalex HV 30 (Festkörpergehalt 30,6 %) dispergiert und auf eine Teilchengröße unter 5µm gemahlen.

D. In einem weiteren separaten Mischer wurden 10 Gewichtsteile eines Polyesters, der erhalten wurde aus 9,8 Gew.-% Neopentylglykol, 6,2 Gew.-% Hexahydrophthalsäure, 22,9 Gew.-% Pripol® 1013 (Dimerfettsäure, Handelsprodukt der Fa. Unichema), 11,1 Gew.-% Hexandiol und 2,0 Gew.-% Xylol als Lösungsmittel, und 2,2 Gewichtsteile Melamin Cymel® 303 (Cyanamid) in 12,8 Gewichtsteilen Wasser dispergiert.

Zu der in D erhaltenen Dispersion wurden unter starkem Rühren das in B erhaltene Gemisch eingerührt. Anschließend wurde die in Schritt B hergestellte Pigmentzubereitung eingerührt.

Der Festkörpergehalt betrug 29,04 %.

### 3. Herstellung einer Pulverklarlack-Dispersion

### 3.1 Herstellung des Acrylatharzes

21,1 Gewichtsteile Xylol wurden vorgelegt und auf 130 °C erwärmt. Zu der Vorlage wurden bei 130 ° C binnen 4 h über zwei getrennte Zulaufbehälter Initiator: 4,5 Gewichtsteile TBPEH (tert.-Butylperethylhexanoat) gemischt mit 4,86 Gewichtsteile Xylol und Monomere:
10,78 Gewichtsteile Methylmethacrylat, 26,5 Gewichtsteile n-Butylmethacrylat, 17,39 Gewichtsteile Styrol und 22,95 Gewichtsteile Glycidylmethacrylat zudosiert. Anschließend wurde auf 180 °C erwärmt und im Vakuum < 100 mbar das Lösemittel abgezogen.

### 3.2. Herstellung des Pulverklarlacks

77,5 Gewichtsteile Acrylatharz, 18,8 Gewichtsteile Dodecandisäure (saurer Härter), 2 Gewichtsteile Tinuvin 1130 (UV-Absorber), 0,9 Gewichtsteile Tinuvin 144 (HALS), 0,4 Gewichtsteile Additol XL 490 (Verlaufsmittel) und 0,4 Gewichtsteile Benzoin (Entgasungsmittel) wurden innig auf einem Henschel-Fluidmischer vermischt, auf einem BUSS PLK 46 Extruder extrudiert, auf einer Hosokawa ACM 2-Mühle vermahlen und über ein 125 µm Sieb abgesiebt.

### 3.4 Herstellung der Dispersion

In 400 Gewichtsteile entsalztes Wasser wurden 0,6 Gewichtsteile Troykyd D777 (Entschäumer), 0,6 Gewichtsteile Orotan 731 K (Dispergierhilfsmittel), 0,06 Gewichtsteile Surfinol TMN 6 (Netzmittel) und 16,5 Gewichtsteile RM8 (Rohm & Haas, nichtionischer Verdicker) dispergiert. Dann wurden in kleinen Portionen 94 Gewichtsteile des Pulverklarlackes eingerührt. Anschließend wurden noch einmal 0,6 Gewichtsteile Troykyd D777, 0,6 Gewichtsteile Orotan 731 K und 0,06 Gewichtsteile Surfinol TMN 6 eindispergiert. Abschließend wurden in kleinen Portionen 94 Gewichtsteile des Pulverklarlackes eingerührt. Das Material wurde in einer Sandmühle 3,5 h gemahlen. Die abschließend gemessene durchschnittliche Teilchengröße betrug 4 µm. Das Material wurde durch einen 50 µm Filter filtriert und abschließend 0,05 % Byk 345 (Verlaufsmittel) zugesetzt.

### 4. Applikation der Beschichtungszusammensetzungen

Die in Tabelle I aufgeführten Beschichtungszuammensetzungen wurden mit einer elektrostatischen Hochrotationsanlage (Behr Ecobell, 45000 U/min, Ausflußrate: 120 ml/min, Spannung: 60 kV) in einem Auftrag mit einer Trockenfilmdicke von 15 µm auf mit einer handelsüblichen Elektrotauchlackierung beschichtete phosphatierte Stahlbleche gespritzt. Die Applikation erfolgte bei einer Lufttemperatur von 23 Grad Celsius und einer relativen Luftfeuchte von 60 %. Die gespritzten Tafeln wurden 10 min. bei 23 Grad Celsius und anschließend 5 min. bei 70°C in einem Umluftofen vorgetrocknet.

Anschließend wurde mit den in den Beispielen 2.1 bis 2.8 beschriebenen Beschichtungszusammensetzungen elektrostatisch mit einer Trockenfilmdicke von 14 µm überlackiert und 5 min. bei 70°C getrocknet.

Die so erhaltene Basislackschicht wurde elektrostatisch mit einer wäßrigen Pulverklarlack-Dispersion überlackiert.

Anschließend wurde die gesamte Lackierung 2 Min. bei 23°C, 5 Min. bei 50°C und bei 140°C 30 Min, lang eingebrannt.

Die erhaltenen Lackierungen zeigten einen sehr guten Verlauf, deckten die Struktur der Elektrotauchlackierung sehr gut ab und zeigten eine gute Zwischenhaftung zur Elektrotauchlackgrundierung.

Die Steinschlagbeständigkeit der erfindungsgemäß hergestellten Lackierungen ist trotz reduzierter Schichtdicke mindestens so hoch wie die Steinschlagbeständigkeit von Lackierungen, die gemäß DE-A-4005961 hergestellt worden sind.

## Patentansprüche

1. Verfahren zur Herstellung eines mehrschichtigen Überzugs auf einer Substratoberfläche bei dem
(A) auf eine mit einer wäßrigen Basisbeschichtungszusammensetzung (i) beschichtete Substratoberfläche eine wäßrige Basisbeschichtungszusammensetzung (ii), die als filmbildendes Mittel eine wäßrige Polymerdispersion enthält, aufgebracht wird,
(B) auf die in Stufe (A) erhaltene Zusammensetzung eine geeignete transparente Deckbeschichtungszusammensetzung aufgebracht wird und
(C) die Basisbeschichtungszusammensetzungen (i) und (ii) zusammen mit der Deckbeschichtungszusammensetzung eingebrannt werden,
dadurch gekennzeichnet, daß die Basisbeschichtungszusammensetzung (ii) eine wäßrige Polymerdispersion enthält, enthaltend
(x) ein Acrylat-Polymer auf Basis von 30 bis 60 Gew.-% C₁-C₈-Alkyl(meth)acrylat-Monomeren, 30 bis 60 Gew.-% vinylaromatischen Monomeren und 0,5 bis 10 Gew.-% (Meth)acrylsäure und
(y) einen nicht- assoziativ wirkenden Verdicker, der ein Acrylat-Copolymer auf (C₁-C₆)-Basis von Alkyl(meth)acrylat und (Meth)acrylsäure enthält.

2. Verfahren zur Ausbesserung von mehrschichtigen Lackierungen, worin
(D) eine Basislackschicht (II) mit einer wäßrigen Beschichtungszusammensetzung (ii), die als filmbildendes Mittel eine wäßrige Polymerdispersion enthält, ausgebessert wird,
(E) die in Stufe (D) erhaltene Beschichtung mit einer geeigneten transparenten Deckbeschichtungszusammensetzung beschichtet wird und
(F) die Beschichtungszusammensetzung (ii) zusammen mit der Deckschicht ausgehärtet wird,
dadurch gekennzeichnet, daß die Basisbeschichtungszusammensetzung (ii) eine wäßrige Polymerdispersion enthält, enthaltend
(x) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(y) einen nicht- assoziativ wirkenden Verdicker, der ein Acrylat-Copolymer auf Basis von (C₁-C₆)-Alkyl(meth)acrylat und (Meth)acrylsäure enthält.

3. Verfahren nach Anspruch 1 oder 2, dadurch gekennzeichnet, daß die Komponente (y) eine Acrylatdispersion mit einem Feststoffgehalt von 2,0 bis 20 Gew.-%, vorzugsweise 7,0 bis 15 Gew.-% enhält.

4. Verfahren nach einem der Ansprüche 1 bis 3, dadurch gekennzeichnet, daß als C₁-C₈-Alkyl(meth)acrylat Monomere der Komponente (x) Methyl(meth)acrylat, Ethyl-(meth)acrylat, Butyl(meth)acrylat und 2-Ethylhexyl(meth)acrylat eingesetzt werden.

5. Verfahren nach einem der Ansprüche 1 bis 4, dadurch gekennzeichnet, daß als vinylaromatische Monomere Styrol, α-Alkylstyrol und Vinyltoluol eingesetzt werden.

6. Verfahren nach einem der Ansprüche 1 bis 5, dadurch gekennzeichnet, daß das Acrylat-Copolymer der Komponente (y) als Monomereinheiten (Meth)acrylsäure und mindestens zwei unterschiedliche Acrylatmonomere enthält, wobei die (Meth)acrylsäure bevorzugt in Mengen von 40 Gew.-% bis 60 Gew.-%, besonders bevorzugt von 46 Gew.-% bis 55 Gew.-%, bezogen auf die Menge des gesamten Copolymers, enthalten ist und das (C₁-C₆)-Alkyl(meth)acrylatmonmer I vorzugsweise in Mengen von 30 Gew.-% bis 50 Gew.-%, insbesondere 36 Gew.-% bis 46 Gew.-%, und das (Meth)acrylatpolymer II vorzugsweise in Mengen von 1 Gew.-% bis 10 Gew.-%, insbesondere 2 Gew.-% bis 8 Gew.-%, jeweils bezogen auf die Menge des gesamten Copolymers, enthalten sind.

7. Verfahren nach einem der Ansprüche 1 bis 5, dadurch gekennzeichnet, daß als weiteres Bindemittel epoxy-funktionelle Verbindungen, insbesondere Glycidylverbindungen, und/oder carboxyl-funktionelle Verbindungen, insbesondere gesättigte, geradkettige, aliphatische Dicarbonsäuren mit 3 bis 20 C-Atomen im Molekül, und/oder Polyvinylalkohol enthalten sind.

8. Verfahren nach einem der Ansprüche 1 bis 6, dadurch gekennzeichnet, daß von 5 bis 25 Gew.-% Effektpigmente, organische und/oder anorganische farbgebende Pigmente enthalten sind.

9. Verfahren nach Anspruch 7, dadurch gekennzeichnet, daß organische und/oder anorganische farbgebende Pigmente und die Komponente A in einer Menge von 25 bis 50 Gew.-%, bezogen auf den Festkörpergehalt, enthalten sind.

10. Verfahren nach Anspruch 8, dadurch gekennzeichnet, daß Effektpigmente und die Komponente A in einer Menge von 15 bis 30 Gew.-%, bezogen auf den Festkörpergehalt, enthalten sind.

11. Verfahren nach einem der Ansprüche 1 bis 9, dadurch gekennzeichnet, daß als wäßrige Basisbeschichtungszusammensetzung (i) eine Lackschichtformulierung verwendet wird, die a) als Bindemittel ein wasserverdünnbares Polyurethanharz enthält, das eine Säurezahl von 10 bis 60 und ein zahlenmittleres Molekulargewicht von 4000 bis 25000 aufweist und herstellbar ist, indem aa) ein Polyester- und/oder Polyetherpolyol mit einem zahlenmittleren Molekulargewicht von 400 bis 5000 oder ein Gemisch aus solchen Polyester- und/oder Polyetherpolyolen, bb) ein Polyisocyanat oder einem Gemisch aus Polyisocyanaten, cc) eine Verbindung, die mindestens eine gegenüber Isocyanatgruppen reaktive und mindestens eine zur Anionenbildung befähigte Gruppe im Molekül aufweist, oder ein Gemisch aus solchen Verbindungen und ggf. dd) eine Hydroxyl- und/oder Aminogruppen enthaltende organische Verbindung mit einem Molekulargewicht von 40 bis 400 oder ein Gemisch aus solchen Verbindungen miteinander umgesetzt werden und das entstandende Reaktionsprodukt wenigstens teilweise neutralisiert wird, sowie b) Pigmente und/oder Füllstoffe enthält, wobei das Verhältnis von Bindemittel zu Pigment zwischen 0,5 : 1 und 1,5:1 liegt.

12. Verfahren nach einem der Ansprüche 1 bis 10, dadurch gekennzeichnet, daß als transparente Deckbeschichtungszusammensetzung in den Stufen (D) und (G) Klarlacke auf Wasser- oder Lösemittebasis, Pulverklarlacke, Pulverslurry-Klarlacke, lösemittelhaltige und wäßrige Zweikomponenten-Klarlacke eingesetzt werden.

13. Substrat beschichtet mit einem mehrschichtigen Überzug, wobei der Überzug auf die Substratoberfläche aufgebracht wird, indem
(A) auf eine mit einer wäßrigen Beschichtungszusammensetzung (i) beschichtete Substratoberfläche eine wäßrige Beschichtungszusammensetzung (ii), die als filmbildendes Mittel eine wäßrige Polymerdispersion enthält, aufgebracht wird,
(B) auf die in Stufe (A) erhaltene Zusammensetzung eine geeignete transparente Deckbeschichtungszusammensetzung aufgebracht wird und
(C) die Beschichtungszusammensetzungen (i) und (ii) zusammen mit der Deckbeschichtungszusammensetzung eingebrannt werden,
dadurch gekennzeichnet, daß die Basisbeschichtungszusammensetzung (ii) eine wäßrige Polymerdispersion enthält, enthaltend
(x) ein Acrylat-Polymer auf Basis von 30 bis 60 Gew.-% C₁-C₈-Alkyl(meth)acrylat-Monomeren, 30 bis 60 Gew.-% vinylaromatischen Monomeren und 0,5 bis 10 Gew.-% (Meth)acrylsäure und
(y) einen nicht- assoziativ wirkenden Verdicker, der ein Acrylat-Copolymer auf Basis von (C₁-C₆)-Alkyl(meth)acrylat und (Meth)acrylsäure enthält.

## Claims

1. A process for preparing a multilayer coating on a substrate surface, in which
(A) an aqueous basecoat composition (ii) containing as film-forming agent an aqueous polymer dispersion is applied to a substrate surface coated with an aqueous basecoat composition (i),
(B) an appropriate transparent topcoat composition is applied to the composition obtained in step (A), and
(C) the basecoat compositions (i) and (ii) are baked together with the topcoat composition,
wherein the basecoat composition (ii) contains an aqueous polymer dispersion comprising
(x) an acrylate polymer based on from 30 to 60% by weight of C₁-C₈-alkyl (meth)acrylate monomers, from 30 to 60% by weight of vinyl-aromatic monomers and from 0.5 to 10% by weight of (meth)acrylic acid, and
(y) a thickener, which does not have an associative effect, containing an acrylate copolymer (C₁-C₆) [sic] based on alkyl (meth)acrylate and (meth)-acrylic acid.

2. A process for repairing multilayer coatings, in which
(D) a basecoat layer (II) is repaired with an aqueous coating composition (ii) containing as film-forming agent an aqueous polymer dispersion,
(E) the coating obtained in step (D) is coated with an appropriate transparent topcoat composition, and
(F) the coating composition (ii) is cured together with the topcoat,
wherein the basecoat composition (ii) contains an aqueous polymer dispersion comprising
(x) an acrylate polymer based on from 30 to 60% by weight of C₁-C₈-alkyl (meth)acrylate monomers, from 30 to 60% by weight of vinyl-aromatic monomers and from 0.5 to 10% by weight of (meth)acrylic acid, and
(y) a thickener, which does not have an associative effect, containing an acrylate copolymer based on (C₁-C₆)-alkyl (meth)acrylate and (meth)acrylic acid.

3. A process as claimed in claim 1 or 2, wherein component (y) comprises an acrylate dispersion having a solids content of from 2.0 to 20% by weight, preferably from 7.0 to 15% by weight.

4. A process as claimed in any one of claims 1 to 3, wherein methyl (meth)acrylate, ethyl (meth)acrylate, butyl (meth)acrylate and 2-ethylhexyl (meth)acrylate are employed as C₁-C₈-alkyl (meth)acrylate monomers of component (x).

5. A process as claimed in any one of claims 1 to 4, wherein styrene, α-alkylstyrene and vinyltoluene are employed as vinyl-aromatic monomers.

6. A process as claimed in any one of claims 1 to 5, wherein the acrylate copolymer of component (y) comprises as monomer units (meth)acrylic acid and at least two different acrylate monomers, the (meth)acrylic acid being present preferably in amounts of from 40% by weight to 60% by weight, with particular preference from 46% by weight to 55% by weight, based on the amount of the overall copolymer and the (C₁-C₆)-alkyl (meth)acrylate monomer I being preferably present in amounts of from 30% by weight to 50% by weight, in particular from 36% by weight to 46% by weight, and the (meth)acrylate polymer II preferably in amounts of from 1% by weight to 10% by weight, in particular from 2% by weight to 8% by weight, based in each case on the amount of the overall copolymer.

7. A process as claimed in any one of claims 1 to 5, wherein epoxy-functional compounds, especially glycidyl compounds, and/or carboxyl-functional compounds, especially saturated, straight-chain, aliphatic dicarboxylic acids having 3 to 20 carbon atoms in the molecule, and/or polyvinyl alcohol are present as additional binder.

8. A process as claimed in any one of claims 1 to 6, wherein from 5 to 25% by weight of special-effect pigments, organic and/or inorganic color-imparting pigments are present.

9. A process as claimed in claim 7, wherein organic and/or inorganic color-imparting pigments and component A in an amount of from 25 to 50% by weight, based on the solids content, are present.

10. A process as claimed in claim 8, wherein special-effect pigments and component A in an amount of from 15 to 30% by weight, based on the solids content, are present.

11. A process as claimed in any one of claims 1 to 9, wherein the aqueous basecoat composition (i) used is a coating formulation comprising a) as binder a water-dilutable polyurethane resin which has an acid number of from 10 to 60 and a number-average molecular weight of from 4000 to 25,000 and can be prepared by reacting aa) a polyester- and/or polyetherpolyol having a number-average molecular weight of from 400 to 5000, or a mixture of such polyester- and/or polyetherpolyols, bb) a polyisocyanate or a mixture of polyisocyanates, cc) a compound having at least one group which is reactive toward isocyanate groups and at least one group which is capable of forming anions in the molecule, or a mixture of such compounds, and, if desired, dd) a hydroxyl and/or amino-containing organic compound having a molecular weight of from 40 to 400, or a mixture of such compounds, with one another, and at least partially neutralizing the resulting reaction product, and also comprising b) pigments and/or fillers, the ratio of binder to pigment being between 0.5:1 and 1.5:1.

12. A process as claimed in any one of claims 1 to 10, wherein waterborne or solventborne clearcoats, transparent powder coatings, transparent powder slurry coating materials, solvent-containing and aqueous two-component clearcoats are employed as transparent topcoat composition in steps (D) and (G).

13. A substrate coated with a multilayer coating, the coating being applied to the substrate surface such that
(A) an aqueous coating composition (ii) containing as film-forming agent an aqueous polymer dispersion is applied to a substrate surface coated with an aqueous basecoat composition (i),
(B) an appropriate transparent topcoat composition is applied to the composition obtained in step (A), and
(C) the basecoat compositions (i) and (ii) are baked together with the topcoat composition,
wherein the basecoat composition (ii) contains an aqueous polymer dispersion comprising
(x) an acrylate polymer based on from 30 to 60% by weight of C₁-C₈-alkyl (meth)acrylate monomers, from 30 to 60% by weight of vinyl-aromatic monomers and from 0.5 to 10% by weight of (meth)acrylic acid, and
(y) a thickener, which does not have an associative effect, containing an acrylate copolymer based on (C₁-C₆)-alkyl (meth)acrylate and (meth)acrylic acid.

## Revendications

1. Procédé de production d'un revêtement multicouche sur une surface de substrat, dans lequel
(A) une composition de couche de fond aqueuse (ii) contenant une dispersion polymère aqueuse en tant qu'agent filmogène est appliquée sur une surface de substrat revêtue d'une composition de couche de fond aqueuse (i),
(B) une composition de couche de finition transparente appropriée est appliquée sur la composition obtenue à l'étape (A), et
(C) les compositions de couches de fond (i) et (ii) sont cuites conjointement avec la composition de couche de finition,
caractérisé en ce que la composition de couche de fond (ii) contient une dispersion polymère aqueuse comprenant
(x) un polymère d'acrylate à base de 30 à 60% en poids de monomères (méth)acrylate d'alkyle en C₁-C₁₈, de 30 à 60% en poids de monomères vinylaromatiques et de 0,5 à 10% en poids d'acide (méth)acrylique, et
(y) un épaississant non associatif contenant un copolymère d'acrylate à base de (méth)acrylate d'alkyle en C₁-C₆ et d'acide (méth)acrylique.

2. Procédé de réparation de revêtements multicouche, dans lequel
(D) un film de couche de fond (II) est réparé à l'aide d'une composition de revêtement aqueuse (ii) contenant une dispersion polymère aqueuse en tant qu'agent filmogène,
(E) le revêtement obtenu à l'étape (D) est revêtu d'une composition de couche de finition transparente appropriée, et
(F) la composition de revêtement (ii) est durcie conjointement avec la couche de finition,
caractérisé en ce que la composition de couche de fond (ii) contient une dispersion polymère aqueuse comprenant
(x) un polymère d'acrylate à base de 30 à 60% en poids de monomères (méth)acrylate d'alkyle en C₁-C₈, de 30 à 60% en poids de monomères vinylaromatiques et de 0,5 à 10% en poids d'acide (méth)acrylique, et
(y) un épaississant non associatif contenant un copolymère d'acrylate à base de (méth)acrylate d'alkyle en C₁-C₆ et d'acide (méth)acrylique.

3. Procédé selon la revendication 1 ou 2, caractérisé en ce que le composant (y) contient une dispersion d'acrylate ayant une teneur en matières solides de 2,0 à 20% en poids, de préférence de 7,0 à 15% en poids.

4. Procédé selon l'une quelconque des revendications 1 à 3, caractérisé en ce que l'on utilise, en tant que monomères (méth)acrylate d'alkyle en C₁-C₈ du composant (x), le (méth)acrylate de méthyle, le (méth)acrylate d'éthyle, le (méth)acrylate de butyle et le (méth)acrylate de 2-éthylhexyle.

5. Procédé selon l'une quelconque des revendications 1 à 4, caractérisé en ce que l'on utilise le styrène, un α-alkylstyrène et le vinyltoluène en tant que monomères vinylaromatiques.

6. Procédé selon l'une quelconque des revendications 1 à 5, caractérisé en ce que le copolymère d'acrylate du composant (y) renferme, en tant que motifs monomères, l'acide (méth)acrylique et au moins deux monomères acrylates différents, l'acide (méth)acrylique étant présent de préférence en quantités de 40% en poids à 60% en poids, particulièrement préférablement de 46% en poids à 55% en poids, par rapport à la quantité de l'ensemble du copolymère, et le monomère (méth)acrylate d'alkyle en C₁-C₆ I est présent de préférence en quantités de 30% en poids à 50% en poids, en particulier de 36% en poids à 46% en poids, et le polymère de (méth)acrylate II est présent de préférence en quantités de 1% en poids à 10% en poids, en particulier de 2% en poids à 8% en poids, dans chaque cas par rapport à la quantité de l'ensemble du copolymère.

7. Procédé selon l'une quelconque des revendications 1 à 5, caractérisé en ce que des composés à fonction époxy, en particulier des composés glycidyliques, et/ou des composés à fonction carboxy, en particulier des acides dicarboxyliques aliphatiques saturés linéaires ayant de 3 à 20 atomes de carbone dans la molécule, et/ou l'alcool polyvinylique sont présents en tant que liant supplémentaire.

8. Procédé selon l'une quelconque des revendications 1 à 6, caractérisé en ce que de 5 à 25% en poids de pigments à effets, de pigments organiques et/ou inorganiques colorants sont présents.

9. Procédé selon la revendication 7, caractérisé en ce que des pigments colorants organiques et/ou inorganiques et le composant A sont présents en une quantité de 25 à 50% en poids, par rapport à la teneur en matières solides.

10. Procédé selon la revendication 8, caractérisé en ce que des pigments à effets, et le composant A sont présents en une quantité de 15 à 30% en poids, par rapport à la teneur en matières solides.

11. Procédé selon l'une quelconque des revendications 1 à 9, caractérisé en ce que l'on utilise, en tant que composition de couche de fond aqueuse (i), une formulation de revêtement comprenant a) en tant que liant, une résine de polyuréthane diluable à l'eau présentant un indice d'acide de 10 à 60 et un poids moléculaire moyen en nombre de 4000 à 25000 et pouvant être préparée en faisant réagir aa) un polyester- et/ou polyéther-polyol ayant un poids moléculaire moyen en nombre de 400 à 5000 ou un mélange de tels polyester- et/ou polyéther-polyols, bb) un polyisocyanate ou un mélange de polyisocyanates, cc) un composé renfermant, dans la molécule, au moins un groupe réactif vis-à-vis des groupes isocyanate et au moins un groupe capable de former des anions, ou un mélange de tels composés et éventuellement dd) un composé organique renfermant des groupes hydroxy et/ou amino ayant un poids moléculaire de 40 à 400 ou un mélange de tels composés, les uns avec les autres, et en neutralisant au moins partiellement le produit de réaction résultant, et b) des pigments et/ou charges, le rapport entre liant et pigment étant compris entre 0,5:1 et 1,5:1.

12. Procédé selon l'une quelconque des revendications 1 à 10, caractérisé en ce que l'on utilise, en tant que composition de couche de finition transparente dans les étapes (D) et (G), des couches transparentes à base d'eau ou de solvant, des couches transparentes pulvérulentes, des couches transparentes de bouillie de poudre, des couches transparentes contenant des solvants et aqueuses à deux composants.

13. Substrat revêtu d'un revêtement multicouche, le revêtement étant appliqué sur la surface de substrat en ce que
(A) une composition de revêtement aqueuse (ii) contenant une dispersion polymère aqueuse en tant qu'agent filmogène est appliquée sur une surface de substrat revêtue d'une composition de revêtement aqueuse (i),
(B) une composition de couche de finition transparente appropriée est appliquée sur la composition obtenue à l'étape (A), et
(C) les compositions de revêtement (i) et (ii) sont cuites conjointement avec la composition de couche de finition,
caractérisé en ce que la composition de couche de fond (ii) contient une dispersion polymère aqueuse comprenant
(x) un polymère d'acrylate à base de 30 à 60% en poids de monomères (méth)acrylate d'alkyle en C₁-C₈, de 30 à 60% en poids de monomères vinylaromatiques de 0,5 à 10% en poids d'acide (méth)acrylique, et
(y) un épaississant non associatif contenant un copolymère d'acrylate à base de (méth)acrylate d'alkyle en C₁-C₆ et d'acide (méth)acrylique.
